(19) Europäisches Patentamt
European Patent Office
Office européen des brevets

(11) **EP 2 781 881 B1**

(12) **FASCICULE DE BREVET EUROPEEN**

(45) Date de publication et mention de la délivrance du brevet:
**28.06.2017 Bulletin 2017/26**

(21) Numéro de dépôt: **14290063.8**

(22) Date de dépôt: **12.03.2014**

(51) Int Cl.:
*G01C 21/16* [(2006.01)]   *F41G 7/22* [(2006.01)]
*G05D 1/10* [(2006.01)]   *F41G 7/00* [(2006.01)]
*G05D 1/12* [(2006.01)]   *F41G 7/36* [(2006.01)]

(54) **Procédé et dispositif pour améliorer la navigation inertielle d'un engin**

Verfahren und Vorrichtung zur Verbesserung der Trägheitsnavigation eines Geräts

Method and device for improving the inertial navigation of a vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2013 FR 1300646**

(43) Date de publication de la demande:
**24.09.2014 Bulletin 2014/39**

(73) Titulaire: **MBDA France**
**92350 Le Plessis-Robinson (FR)**

(72) Inventeurs:
• **de Araujo, Bruno**
**92130 Issy-les-Moulineaux (FR)**
• **Guibout, Vincent**
**75116 Paris (FR)**
• **Larcher, Eric**
**92250 La Garenne Colombes (FR)**

(74) Mandataire: **Gevers & Orès**
**41 avenue de Friedland**
**75008 Paris (FR)**

(56) Documents cités:
**EP-A1- 0 484 202**

• **ROSS C C ET AL: "A transfer alignment algorithm study based on actual flight test data from a tactical air-to-ground weapon launch", POSITION LOCATION AND NAVIGATION SYMPOSIUM, 1994., IEEE LAS VEGAS, NV, USA 11-15 APRIL 1994, NEW YORK, NY, USA,IEEE, NEW YORK, NY, USA, 11 avril 1994 (1994-04-11), pages 431-438, XP010117762, DOI: 10.1109/PLANS.1994.303346 ISBN: 978-0-7803-1435-1**
• **D.H. Titterton ET AL: "The alignment of ship launched missile IN systems - IEEE Xplore Document", IEE Colloquium on Inertial Sensor Development, 9 January 1990 (1990-01-09), XP055325373,**
• **TITTERTON D H ET AL: "The alignment of ship launched missile IN systems", IEE COLLOQUIUM ON INERTIAL NAVIGATION SENSOR DEVELOPMENT, 1 January 1990 (1990-01-01), pages 1/1-116, XP006524877, London**

EP 2 781 881 B1

Printed by Jouve, 75001 PARIS (FR)

## Description

La présente invention concerne un procédé et un dispositif pour améliorer la navigation inertielle d'un engin.

Quoique non exclusivement, elle est particulièrement appropriée à être mise en oeuvre avec des missiles tactiques, par exemple du type antichar ou antibunker, dont la portée est de quelques kilomètres (moyenne portée).

On sait que de tels missiles peuvent présenter une centrale inertielle leur permettant une navigation partiellement ou totalement inertielle. Cependant, ces missiles étant détruits lorsqu'ils atteignent leur cible, les centrales inertielles qu'ils embarquent ne sont pas, pour des raisons de coûts, des centrales inertielles de haute performance, qui, de ce fait, présentent des biais accélérométriques et gyrométriques.

Il va de soi que ces biais accélérométriques et gyrométriques engendrent des erreurs de dérive de navigation, en position et en attitude, limitant la portée utile desdits missiles.

Pour remédier à de tels inconvénients, on pourrait penser à utiliser une centrale inertielle de meilleure qualité, à prévoir un capteur complémentaire (par exemple de type GPS) et/ou, dans le cas où le missile comporte un autodirecteur, à augmenter la portée ou la taille du champ de vision de cet autodirecteur. Toutefois, de telles mesures entraînent obligatoirement un coût supplémentaire pour les missiles. Il est connu d'aligner un missile portant une centrale inertielle de qualité moyenne avec un porteur équipé d'une centrale inertielle de qualité haute précision, voir D.H. Titterton, RAE Farnborough, et J.L.Weston, "The alignment of ship launched missile IN systems", IEE colloquium in Inertial Sensor Development, 1990, http://ieeexplore.ieee.org/ document/190915/.

L'objet de la présente invention est de remédier à cet inconvénient en réduisant les erreurs dues aux biais des accéléromètres et des gyromètres de la centrale inertielle de qualité médiocre des missiles, et, donc, d'améliorer les performances de navigation inertielle de ces derniers, en évitant tout recours à une mesure entraînant un coût supplémentaire.

A cette fin, selon l'invention, le procédé pour améliorer la navigation inertielle d'un engin équipé d'une centrale inertielle de qualité médiocre et tiré depuis un porteur équipé d'une centrale inertielle de précision, est remarquable en ce que :

- avant le tir dudit engin depuis le porteur, les biais moyens des accéléromètres et des gyrométres de la centrale inertielle dudit engin sont déterminés à l'aide de la centrale inertielle dudit porteur ; et
- pendant la navigation inertielle dudit engin, les mesures accélérométriques

et gyrométriques délivrées par ladite centrale inertielle dudit engin sont corrigées par lesdits biais moyens déterminés avant tir.

Ainsi, grâce à l'invention, on prend en compte les biais moyens des accéléromètres et des gyromètres qui créent les principales erreurs de navigation, de sorte que la navigation inertielle dudit engin peut être satisfaisante malgré la médiocre qualité de la centrale inertielle. Le procédé conforme à la présente invention est basé sur l'observation de la Demanderesse que les biais accélérométriques et gyrométriques d'une telle centrale inertielle sont relativement stables au cours du temps et que les variations de ces biais, pendant la durée de vol de l'engin, sont négligeables comparées aux valeurs absolues des biais déterminés avant le lancement de l'engin.

On doit remarquer que la centrale inertielle de l'engin et la centrale inertielle du porteur ont chacune leur propre système d'axes de référence par rapport auxquels elles délivrent leurs mesures accélérométriques et gyrométriques et que ces deux systèmes d'axes de référence sont fixes l'un par rapport à l'autre, en position et en orientation, tant que ledit engin n'est pas tiré.

Aussi, pour la détermination desdits biais de la centrale inertielle dudit engin, il est avantageux que les mesures accélérométriques et gyrométriques de l'une des centrales inertielles soient, par une transformation prenant en compte la position et l'orientation relatives des deux systèmes d'axes, exprimées dans le système d'axes de référence de l'autre desdites centrales inertielles. Dans ce cas, on prévoit que :

- alors que la centrale inertielle du porteur est déjà en fonctionnement, la centrale inertielle de l'engin est mise en fonctionnement ;
- les mesures accélérométriques et gyrométriques de l'une des centrales inertielles sont, par ladite transformation prenant en compte la position et l'orientation relatives des deux systèmes d'axes de référence, exprimées dans le système d'axes de référence de l'autre desdites centrales inertielles ; et
- dans le système d'axes de cette autre desdites centrales inertielles, on compare en en faisant la différence, les mesures accélérométriques et gyrométriques des deux centrales inertielles.

De préférence :

- on filtre les différences de mesures accélérométriques et gyrométriques ainsi obtenues pour obtenir des estimées courantes des biais moyens des accéléromètres et des gyromètres de la centrale inertielle dudit engin ; et
- à l'instant du tir de l'engin, on arrête le processus ci-dessus d'obtention desdites estimées courantes des biais moyens et on garde les dernières valeurs de ces dernières qui constituent les estimées des biais moyens des accéléromètres et des gyromètres de la centrale inertielle de l'engin.

Par ailleurs, pendant le vol dudit engin, on effectue en continu les opérations suivantes :

- différence entre les mesures instantanées des accéléromètres et des gyromètres de la centrale inertielle de l'engin et lesdites estimées des biais moyens, pour obtenir des mesures accéléromètriques et gyromètriques de l'engin corrigées ; et
- utilisation de ces mesures accélérométriques et gyrométriques corrigées dans la navigation inertielle dudit engin.

La présente invention concerne de plus un dispositif pour améliorer la navigation inertielle d'un engin équipé d'une centrale inertielle de qualité médiocre et tiré depuis un porteur équipé d'une centrale inertielle de précision, lesdites centrales ayant chacune leur propre système d'axes de référence par rapport auxquels elles délivrent leurs mesures accélérométriques et gyrométriques et ces deux systèmes d'axes de référence étant fixes l'un par rapport à l'autre, en position et en orientation, tant que ledit engin n'est pas tiré.

Selon la présente invention, ce dispositif est remarquable en ce qu'il comporte :

- des moyens de calcul permettant, par une transformation prenant en compte la position et l'orientation relatives des deux systèmes d'axes, d'exprimer les mesures accélérométriques et gyrométriques de l'une des centrales inertielles dans le système d'axes de référence de l'autre desdites centrales inertielles ; et
- des moyens de comparaison permettant, dans ce système d'axes de référence de cette autre desdites centrales inertielles, de comparer les mesures accélérométriques et gyrométriques des deux centrales inertielles.

De plus, le dispositif conforme à la présente invention comporte :

- un filtre pour filtrer les différences de mesures accélérométriques et gyrométriques résultant de la comparaison à l'aide desdits moyens de comparaison et pour obtenir des estimées courantes des biais moyens des accéléromètres et des gyromètres de la centrale inertielle dudit engin ; et
- un soustracteur pour retrancher, des mesures instantanées des accéléromètres et des gyromètres de la centrale inertielle de l'engin en vol, les dernières valeurs, avant tir, desdites estimées de biais courants.

Les figures du dessin annexé feront bien comprendre comment l'invention peut être réalisée. Sur ces figures, des références identiques désignent des éléments semblables.

La figure 1 est une vue schématique et partielle, avant tir, d'un missile porté par un porteur.

La figure 2 est un schéma synoptique illustrant la présente invention.

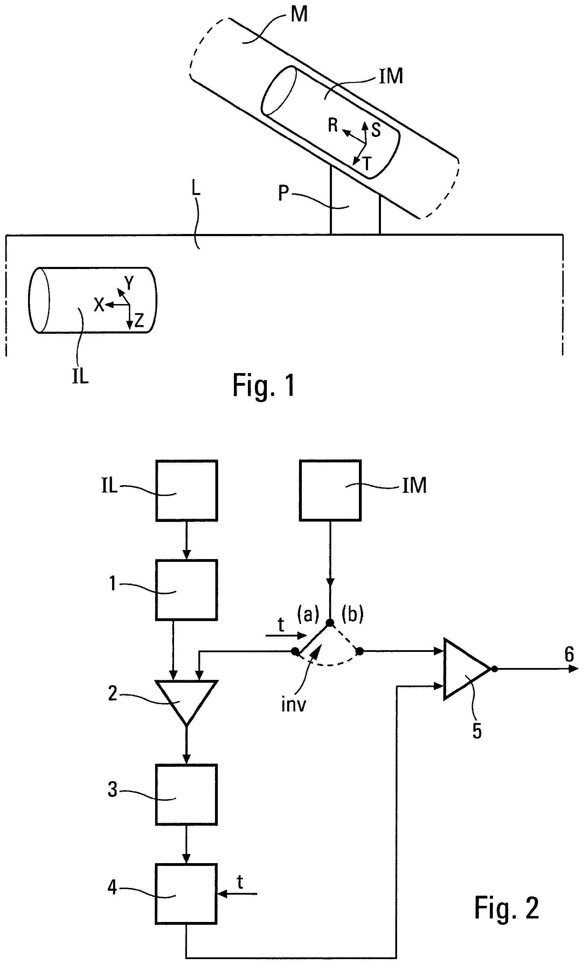

Sur la figure 1, on a représenté schématiquement un engin M, par exemple un missile tactique à moyenne portée (quelques kilomètres), rigidement monté sur un porteur L, par exemple un véhicule terrestre, un aéronef, etc...par l'intermédiaire d'un pylône P.

L'engin M comporte une centrale inertielle IM, par exemple à trois accéléromètres et à trois gyromètres (non représentés) définissant un système d'axes de référence R, S et T. De même le porteur L comporte une centrale inertielle IL, par exemple à trois accéléromètres et à trois gyromètres (non représentés) définissant un système d'axes de référence X,Y, et Z.

Avant le tir de l'engin M depuis le porteur L, la position relative et l'orientation relative des deux systèmes d'axes de référence R, S, T et X, Y, Z sont fixes et connues, par suite du positionnement rigide connu de l'engin M sur le porteur L. Il est donc possible, grâce à une transformation mathématique appropriée, d'exprimer les mesures accélérométriques et gyrométriques de l'une des centrales inertielles IM ou IL dans le système d'axes de référence de l'autre desdites centrales inertielles IL ou IM.

Cette propriété est mise en oeuvre par la présente invention, comme l'illustre le schéma synoptique de la figure 2.

Sur cette figure, on a représenté un calculateur 1 permettant d'effectuer cette transformation et d'exprimer les mesures accélérométriques et gyromètriques $A_{XL}$, $A_{YL}$, $A_{ZL}$, $p_L$, $q_L$, et $r_L$, qu'il reçoit de la centrale inertielle IL du porteur L dans le système d'axes de référence R, S, T de la centrale inertielle IM de l'engin M. Ci-après, ces mesures accélérométriques et gyrométriques ayant subi la transformation du calculateur 1 sont référencées $A_{XL}'$, $A_{YL}'$, $A_{ZL}'$, $p_L'$, $q_L'$ et $r_L'$.

Puisque ces mesures accélérométriques et gyrométriques transformées se trouvent maintenant repérées dans le même système d'axes de référence R, S, T que les mesures accélérométriques et gyrométriques de la centrale inertielle IM de l'engin M (ci-après référencées $A_{RM}$, $A_{SM}$, $A_{TM}$, $p_M$, $q_M$, et $r_M$), elle peuvent être comparées à ces dernières dans un comparateur 2 (sur la figure 2, la liaison entre la centrale inertielle IM et le comparateur 2 est schématiquement représentée par une position a d'un inverseur commandable inv).

Ainsi, à la sortie du comparateur 2, on obtient les différences :

$$\Delta_{AX} = A_{RM} - A_{XL}'$$

$$\Delta_{AY} = A_{SM} - A_{YL}'$$

$$\Delta_{AZ} = A_{TM} - A_{ZL}{'}$$

$$\Delta p = p_M - p_L{'}$$

$$\Delta q = q_M - q_L{'}$$

$$\Delta r = r_M - r_L{'}$$

qui expriment les biais instantanés de la centrale inertielle IM de l'engin M par rapport aux mesures de la centrale inertielle IL du porteur L.

De ce qui précède, on comprend donc aisément que si, avant le tir de l'engin M depuis le porteur L et alors que la centrale inertielle IL dudit porteur est en fonctionnement, on met en fonctionnement la centrale inertielle IM de l'engin M, on peut obtenir de façon continue ces biais instantanés $\Delta_{AX}$, $\Delta_{AY}$, $\Delta_{AZ}$, $\Delta p$, $\Delta q$ et $\Delta r$ de la centrale inertielle IM.

Pour conserver les basses fréquences, c'est-à-dire les biais moyens, et filtrer les bruits de mesures, lesdits biais instantanés apparaissant à la sortie du comparateur 2 sont filtrés par un filtre 3, ces biais instantanés filtrés constituant donc des estimées courantes des biais moyens des accéléromètres et des gyromètres de la centrale inertielle IM de l'engin M.

A l'instant du tir, on arrête le processus décrit ci-dessus de détermination des estimées courantes des biais moyens de la centrale IM et on enregistre dans une mémoire 4 la dernière valeur de chacune desdites estimées courantes (sur la figure 2, ces actions à l'instant du tir sont figurées par des flèches t qui agissent sur la mémoire 4 et sur l'inverseur inv pour lui faire prendre sa position b reliant la centrale inertielle à un comparateur 5). Ces dernières valeurs des estimées courantes des biais moyens de la centrale IM constituent alors les meilleures estimées dont on dispose des biais moyens de la centrale inertielle IM de l'engin M et peuvent être référencés par biais $A_{RM}$, biais $A_{SM}$, biais $A_{TM}$, biais $p_M$, biais $q_M$, et biais $r_M$.

Après le tir, pendant le vol de l'engin M, grâce au comparateur 5 recevant à la fois des mesures accélérométriques et gyrométriques instantanées $A_{RM}$, $A_{SM}$, $A_{TM}$, $p_M$, $q_M$, $r_M$, de la centrale inertielle M et lesdits biais, ce comparateur 5 peut adresser aux dispositifs de navigation inertielle de l'engin M les mesures accélérométriques et gyrométriques corrigées $A_{RM}$ - biais $A_{RM}$, $A_{SM}$ - biais $A_{SM}$, $A_{TM}$ - biais $A_{TM}$, $p_M$ - biais $p_M$, $q_M$ - biais $q_M$, et $r_M$ - biais $r_M$.

On remarquera que, dans le processus ci-dessus, la transformation du calculateur 1 pourrait être appliquée à la centrale inertielle IM de l'engin M au lieu de l'être à la centrale inertielle IL du porteur L. De plus, bien que la mémoire 4 et le comparateur 5 doivent se trouver à bord de l'engin M, le calculateur 1, le comparateur 2 et le filtre 3 peuvent se trouver aussi bien à bord de l'engin M que du porteur L. Dans ce dernier cas, la liaison entre le filtre 3 et la mémoire 4 est rompue au moment du tir.

## Revendications

1. Procédé pour améliorer la navigation inertielle d'un engin (M) équipé d'une centrale inertielle (IM) de qualité médiocre et tiré depuis un porteur (L) équipé d'une centrale inertielle (IL) de précision, procédé dans lequel

   - avant le tir dudit engin (M) depuis le porteur (L), les biais moyens des accéléromètres et des gyromètres de la centrale inertielle (IM) dudit engin sont déterminés à l'aide de la centrale inertielle (IL) dudit porteur (L) ;

   **caractérisé en ce que**

   - pendant la navigation inertielle dudit engin (M), après le tir, les mesures accélérométriques et gyrométriques délivrées par ladite centrale inertielle (IM) dudit engin (M) sont corrigées par lesdits biais moyens déterminés avant tir.

2. Procédé selon la revendication 1, dans lequel la centrale inertielle (IM) de l'engin (M) et la centrale inertielle (IL) du porteur (L) ont chacune leur propre système d'axe de référence (X, Y, Z - R, S, T) par rapport auxquels elles délivrent leurs mesures accélérométriques et gyrométriques, ces deux systèmes d'axes de référence étant fixes l'un par rapport à l'autre, en position et en orientation, tant que ledit engin n'est pas tiré,
   **caractérisé en ce que**, pour la détermination desdits biais de la centrale inertielle (IM) dudit engin (M), les mesures accélérométriques et gyrométriques, de l'une des centrales inertielles (IL, IM) sont, par une transformation prenant en compte la position et l'orientation relatives des deux systèmes d'axes (X, Y, Z - R, S, T), exprimées dans le système d'axes de référence de l'autre desdites centrales inertielles.

3. Procédé selon la revendication 2,
   **caractérisé en ce que** :

   - alors que la centrale inertielle (IL) du porteur (L) est déjà en fonctionnement, la centrale inertielle (IM) de l'engin (M) est mise en fonctionnement ;
   - les mesures accélérométriques et gyrométriques de l'une des centrales inertielles (IL, IM) sont, par ladite transformation prenant en compte la position et l'orientation relatives des deux systèmes d'axes de référence (X, Y, Z - R, S, T), exprimées dans le système d'axes de référence de l'autre

desdites centrales inertielles ; et

- dans ce système d'axes de référence de cette autre desdites centrales inertielles, on compare, en en faisant la différence, les mesures accélérométriques et gyrométriques des deux centrales inertielles.

4.  Procédé selon la revendication 3, **caractérisé en ce que** :

- on filtre les différences de mesures accélérométriques et gyrométriques ainsi obtenues pour obtenir des estimées courantes des biais moyens des accéléromètres et des gyromètres de la centrale inertielle (IM) dudit engin (M) ; et
- à l'instant du tir de l'engin (M), on arrête le processus ci-dessus d'obtention desdits estimées courantes des biais moyens, et on garde les dernières valeurs de ces dernières qui constituent les estimées des biais moyens des accéléromètres et des gyromètres de la centrale inertielle de l'engin.

5.  Procédé selon la revendication 4, **caractérisé en ce que**, pendant le vol dudit engin (M), on effectue en continu les opérations suivantes :

- différence entre les mesures instantanées des accéléromètres et des gyromètres de la centrale inertielle (IM) de l'engin (M) et lesdites estimées des biais moyens, pour obtenir des mesures accélérométriques et gyrométriques de l'engin corrigées ; et
- utilisation de ces mesures accélérométriques et gyrométriques corrigées dans la navigation inertielle dudit engin (M).

6.  Dispositif pour améliorer la navigation inertielle d'un engin (M) équipé d'une centrale inertielle (IM) de qualité médiocre et tiré depuis un porteur (L) équipé d'une centrale inertielle (IL) de précision, lesdites centrales (IM, IL) ayant chacune leur propre système d'axes de référence (X, Y, Z - R, S, T) par rapport auxquels elles délivrent leurs mesures accélérométriques et gyrométriques, et ces deux systèmes d'axes de référence étant fixes l'un par rapport à l'autre, en position et en orientation, tant que ledit engin (M) n'est pas tiré, le dispositif comportant

- des moyens de calcul (1) permettant, par une transformation prenant en compte la position et l'orientation relatives des deux systèmes d'axes (X, Y, Z - R, S, T), d'exprimer les mesures accélérométriques et gyrométriques de l'une des centrales inertielles dans le système d'axes de référence de l'autre desdites centrales inertielles, et
- des moyens (2,3,4) configurés pour déterminer les biais moyens des mesures accélérométriques et gyrométriques délivrées par ladite centrale inertielle (IM) dudit engin (M) à l'aide de la centrale inertielle (IL) dudit porteur (L) avant le tir dudit engin;

**caractérisé en ce que** le dispositif comporte des moyens (5,6) configurés pour corriger lesdites mesures accélérométriques et gyrométriques délivrées par ladite centrale inertielle (IM) dudit engin (M) pendant la navigation inertielle dudit engin (M) par lesditb biais moyens déterminés avant tir.

7.  Dispositif selon la revendication 6, **caractérisé en ce qu'**il comporte :

- un filtre (3) pour filtrer les différences de mesures accélérométriques et gyrométriques résultant de la comparaison à l'aide desdits moyens de comparaison (2) et pour obtenir des estimées courantes des biais moyens des accéléromètres et des gyromètres de la centrale inertielle (IM) dudit engin ; et
- un soustracteur (5) pour retrancher des mesures instantanées des accéléromètres et des gyromètres de la centrale inertielle (IM) de l'engin (M) en vol, les dernières valeurs, avant tir, desdites estimées de biais courants.

**Patentansprüche**

1.  Verfahren zur Verbesserung der Trägheitsnavigation eines Geräts (M), das mit einer niedrigen Qualität Trägheitszentrale (IM) versehen ist und von einem Träger (L) abgeschossen wird, der mit einer Präzisionsträgheitszentrale (IL) versehen ist, wobei in dem Verfahren

- vor dem Abschuss des Geräts (M) durch den Träger (L) mittlere Verzerrungen von Akzelerometern und Gyrometern der Trägheitszentrale (IM) des Geräts mit Hilfe der Trägheitszentrale (IL) des Trägers (L) bestimmt werden;

**dadurch gekennzeichnet, dass**

- während der Trägheitsnavigation des Geräts (M), nach dem Abschuss, die akzelerometrischen und gyrometrischen Messungen, die von der Trägheitszentrale (IM) des Geräts (M) geliefert werden, durch die vor dem Abschuss bestimmten mittleren Verzerrungen korrigiert werden.

2. Verfahren nach Anspruch 1, wobei die Trägheitszentrale (IM) des Geräts (M) und die Trägheitszentrale (IL) des Trägers (L) jeweils ihr eigenes Referenzachsensystem (X, Y, Z - R, S, T) aufweisen, in Bezug auf welches sie ihre akzelerometrischen und gyrometrischen Messungen liefern, wobei die beiden Referenzachsensysteme in Bezug aufeinander, in Position und Orientierung, festgelegt sind, solange das Gerät nicht abgeschossen wird, **dadurch gekennzeichnet, dass**, zur Bestimmung der Verzerrungen der Trägheitszentrale (IM) des Geräts (M), die akzelerometrischen und gyrometrischen Messungen einer der Trägheitszentralen (IL, IM), durch eine Transformation unter Berücksichtigung der relativen Position und Orientierung der beiden Achsensysteme (X, Y, Z - R, S, T), in dem Referenzachsensystem der anderen der Trägheitszentralen ausgedrückt werden.

3. Verfahren nach Anspruch 2, **dadurch gekennzeichnet, dass**:

   - wenn die Trägheitszentrale (IL) des Trägers (L) bereits in Betrieb ist, die Trägheitszentrale (IM) des Geräts (M) in Betrieb gesetzt wird;
   - die akzelerometrischen und gyrometrischen Messungen einer der Trägheitszentralen (IL, IM), durch die Transformation unter Berücksichtigung der relativen Position und Orientierung der beiden Referenzachsensysteme (X, Y, Z- R, S, T), in dem Referenzachsensystem der anderen der Trägheitszentralen ausgedrückt werden; und
   - in diesem Referenzachsensystem dieser anderen der Trägheitszentralen, durch Differenzbildung, die akzelerometrischen und gyrometrischen Messungen der beiden Trägheitszentralen verglichen werden.

4. Verfahren nach Anspruch 3, **dadurch gekennzeichnet, dass**:

   - die so erhaltenen Differenzen der akzelerometrischen und gyrometrischen Messungen gefiltert werden, um aktuelle Schätzungen der mittleren Verzerrungen der Akzelerometer und der Gyrometer der Trägheitszentrale (IM) des Geräts (M) zu erhalten; und
   - im Moment des Abschusses des Geräts (M) der obige Prozess zum Erhalten aktueller Schätzungen der mittleren Verzerrungen gestoppt wird, und die letzten Werte dieser Letzteren behalten werden, welche die Schätzungen der mittleren Verzerrungen der Akzelerometer und der Gyrometer der Trägheitszentrale des Geräts darstellen.

5. Verfahren nach Anspruch 4, **dadurch gekenn-**

**zeichnet, dass**, während des Flugs des Geräts (M), kontinuierlich die folgenden Operationen durchgeführt werden:

   - Differenz zwischen den Momentanmessungen der Akzelerometer und der Gyrometer der Trägheitszentrale (IM) des Geräts (M) und den Schätzungen der mittleren Verzerrungen, um korrigierte akzelerometrische und gyrometrische Messungen des Geräts zu erhalten; und
   - Verwendung dieser korrigierten akzelerometrischen und gyrometrischen Messungen bei der Trägheitsnavigation des Geräts (M).

6. Vorrichtung zur Verbesserung der Trägheitsnavigation eines Geräts (M), das mit einer niedrigen Qualität Trägheitszentrale (IM) versehen ist und von einem Träger (L) abgeschossen wird, der mit einer Präzisionsträgheitszentrale (IL) versehen ist, wobei die Zentralen (IM, IL) jeweils ihr eigenes Referenzachsensystem (X, Y, Z - R, S, T) aufweisen, in Bezug auf welches sie ihre akzelerometrischen und gyrometrischen Messungen liefern, und wobei diese beiden Referenzachsensysteme in Bezug aufeinander, in Position und Orientierung, festgelegt sind, solange das Gerät (M) nicht abgeschossen wird, und wobei die Vorrichtung umfasst

   - Rechenmittel (1), die es gestatten, durch eine Transformation unter Berücksichtigung der relativen Position und Orientierung der beiden Achsensysteme (X, Y, Z - R, S, T), die akzelerometrischen und gyrometrischen Messungen einer der Trägheitszentralen in dem Referenzachsensystem der anderen der Trägheitszentralen auszudrücken, und
   - Mittel (2, 3, 4), welche ausgelegt sind, die mittleren Verzerrungen der akzelerometrischen und gyrometrischen Messungen, die von der Trägheitszentrale (IM) des Geräts (M) geliefert werden, mit Hilfe der Trägheitszentrale (IL) des Trägers (L) vor dem Abschuss des Geräts zu bestimmen;

**dadurch gekennzeichnet, dass** die Vorrichtung umfasst:

   Mittel (5, 6), welche ausgelegt sind, die akzelerometrischen und gyrometrischen Messungen, welche von der Trägheitszentrale (IM) des Geräts (M) während der Trägheitsnavigation des Geräts (M) geliefert werden, durch die vor dem Abschuss bestimmten mittleren Verzerrungen zu korrigieren.

7. Vorrichtung nach Anspruch 6, **dadurch gekennzeichnet, dass** diese umfasst:

- ein Filter (3), um die Differenzen der akzelerometrischen und gyrometrischen Messungen zu filtern, die aus dem Vergleich mit Hilfe der Vergleichsmittel (2) stammen, und um aktuelle Schätzungen der mittleren Verzerrungen der Akzelerometer und der Gyrometer der Trägheitszentrale (IM) des Geräts zu erhalten; und

- einen Subtrahierer (5), um von den Momentanmessungen der Akzelerometer und der Gyrometer der Trägheitszentrale (IM) des Geräts (M) im Flug die letzten Werte der Schätzungen der aktuellen Verzerrungen vor dem Abschuss zu subtrahieren.

## Claims

1. Method for improving the inertial navigation of a projectile (M) equipped with a mediocre-quality inertial unit (IM) and fired from a carrier (L) equipped with a precision inertial unit (IL), said method wherein

    - before the firing of said projectile (M) from the carrier (L), the mean biases of the accelerometers and of the gyrometers of the inertial unit (IM) of said projectile are determined by means of the inertial unit (IL) of said carrier (L);

    **characterised in that**:

    - during the inertial navigation of said projectile (M), after the firing, the accelerometric and gyrometric measurements provided by said inertial unit (IM) of said projectile (M) are corrected by said mean biases determined before firing.

2. Method according to claim 1, in which the inertial unit (IM) of the projectile (M) and the inertial unit (IL) of the carrier (L) each have their own reference axis system (X, Y, Z - R, S, T) with respect to which they provide their accelerometric and gyrometric measurements, these two reference axis systems being fixed with respect to each other, in terms of position and orientation, as long as said projectile is not fired, **characterised in that**, for determining said biases of the inertial unit (IM) of said projectile (M), the accelerometric and gyrometric measurements of one of the inertial units (IL, IM) are, by means of a transformation taking into account the relative position and orientation of the two axis systems (X, Y, Z - R, S, T), expressed in the reference axis system of the other of said inertial units.

3. Method according to claim 2, **characterised in that**:

    - when the inertial unit (IL) of the carrier (L) is already in operation, the inertial unit (IM) of the projectile (M) is started,

- the accelerometric and gyrometric measurements of one of the inertial units (IL, IM) are, by means of said transformation taking in account the relative position and orientation of the two reference axis systems (X, Y, Z - R, S, T), expressed in the reference axis system of the other of said inertial units; and

    - in this reference axis system of said other of said inertial units, the accelerometric and gyrometric measurements of the two inertial units are compared by taking the difference.

4. Method according to claim 3, **characterised in that**:

    - the differences in accelerometric and gyrometric measurements thus obtained are filtered in order to obtain current estimates of the mean biases of the accelerometers and gyrometers of the inertial unit (IM) of said projectile (M); and

    - at the moment of firing of the projectile (M), the above process of obtaining said current estimates of the mean biases is stopped and the last values of these, which constitute the estimates of the mean biases of the accelerometers and of the gyrometers of the inertial unit of the projectile, are kept.

5. Method according to claim 4, **characterised in that**, during the flight of said projectile (M), the following operations are performed continuously:

    - differentiating between the instantaneous measurements of the accelerometers and of the gyrometers of the inertial unit (IM) of the projectile (M) and said estimates of the mean biases, in order to obtain corrected accelerometric and gyrometric measurements of the projectile; and

    - using these corrected accelerometric and gyrometric measurements in the inertial navigation of said projectile (M).

6. Device for improving the inertial navigation of a projectile (M) equipped with an inertial unit (IM) of mediocre quality and fired from a carrier (L) equipped with a precision inertial unit (IL), said units (IM, IL) each having their own reference axis system (X, Y ,Z - R, S, T) with respect to which they provide their accelerometric and gyrometric measurements, and these two reference axis systems being fixed with respect to each other, in terms of position and orientation, as long as said projectile (M) is not fired, said device comprising :

    - computing means (1) making it possible, by means of a transformation taking into account the relative position and orientation of the two axis systems (X, Y, Z - R, S, T), to express the accelerometric and gyrometric measurements of one of the inertial units in the reference axis system of the other of said inertial units; and
- means (2, 3, 4) configured to determine the mean biases of the accelerometric and gyrometric measurements provided by said inertial unit (IL) of said carrier (L) before firing of said projectile;

**characterised in that** said device comprises means (5, 6) configured to correct said accelerometric and gyrometric measurements provided by said inertial unit (IM) of said projectile (M) during the inertial navigation of said projectile (M) by said mean biases determined before firing.

7. Device according to claim 6, **characterised in that** it comprises:

- a filter (3) for filtering the differences in accelerometric and gyrometric measurements resulting from the comparison using said comparison means (2) and for obtaining current estimates of the mean biases of the accelerometers and gyrometers of the inertial unit (IM) of said projectile; and
- a subtractor (5) for subtracting, from the instantaneous measurements of the accelerometers and gyrometers of the inertial unit (IM) of the projectile (M) in flight, the last values, before firing, of said estimates of current biases.

Fig. 1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D.H. TITTERTON ; RAE FARNBOROUGH ; J.L.WESTON.** The alignment of ship launched missile IN systems. *IEE colloquium in Inertial Sensor Development,* 1990, http://ieeexplore.ieee.org/ document/190915